# EUROPEAN PATENT SPECIFICATION

(11) **EP 4 036 429 B1**
(45) Date of publication and mention of the grant of the patent: **20.11.2024**
(21) Application number: 21154471.3
(22) Date of filing: 31.01.2021
(51) Int. Cl.: F16C 29/00, F16C 29/12

(54) **DEVIATION COMPENSATION INTEGRATED IN THE CARRIAGE OF A LINEAR AXIS**
IM SCHLITTEN EINER LINEARACHSE INTEGRIERTE ABWEICHUNGSKOMPENSIERUNG
COMPENSATION D'ÉCARTS INTÉGRÉE DANS LE SUPPORT D'UN AXE LINÉAIRE

(43) Date of publication of application: 03.08.2022
(73) Proprietor: SNR Wälzlager GmbH, 33719 Bielefeld (DE)
(72) Inventor: Grote, Detlef, D-33818 Leopoldshöhe (DE)
(74) Representative: Alatis

(56) References cited:
- CH-A5- 663 373
- JP-A- 2007 303 541
- JP-U- H05 333
- US-A- 4 802 774
- US-A- 5 249 867
- US-A1- 2004 184 684

## Description

### TECHNICAL FIELD OF THE INVENTION

The invention relates generally to the field of linear guiding systems also known as a linear axis.

More specifically, the invention relates to a carriage slidably guided along a longitudinal axis of one or more guiding rails via sliders.

The invention can be used, in particular, for machine tools manufacturing, packaging and printing machines, aircraft construction, automation and assembly lines, wood and paper industry, semiconductor industry and medical engineering.

In the following, when it is referred to vertical, horizontal, front and rear, or top and bottom, this must be construed by reference to a linear guiding system in regular operating position. It is meant by a longitudinal and transversal axis respectively the sliding direction of the linear guiding system and the horizontal axis perpendicular to the sliding direction.

### BACKGROUND ART

Linear guiding systems are known where a working platform is slidably mounted on a pair of parallel guiding rails through four sliders located underneath the working platform, as disclosed e.g. in JP H05 333 U or JP2007 303541 A. Usually, a pair of longitudinally spaced apart sliders are slidably mounted on each guiding rail. In such assembly, it is crucial that the guiding rails are accurately parallel and at the same height because conventional linear guiding systems accept only small mounting tolerances. Guiding rails misalignment lead to suboptimal operation of the linear guiding system and generate operational constraints between the sliders and the rails which can damage the guiding system, increase hardware wear and degrade the guiding accuracy.

Therefore, an accurate positioning of the guiding rails is essential when assembling the linear guiding system. However, such accurate positioning costs time and effort for assembling the system and requires an expensive accurate substructure for supporting the rails.

Linear guiding systems are used in different working environment where the ambient temperature can vary significantly. Moreover, the driving devices used for shifting the working platform along the guiding rails generate heat. This induces thermal expansion of the substructure and of the gantry formed by the working platform and the sliders. Thermal expansion is not homogenous for all components of the substructure and of the gantry due to different materials or temporary different component temperatures. Therefore, despite costly accurate original positioning of the rails, misalignment can occur during operation of the linear guiding system due to thermal expansion which generates, in addition to the mechanical issues mentioned above, critical tangential load on both the sliders and the rails.

### SUMMARY OF THE INVENTION

Accordingly, an object of the present invention is to provide a cost-effective and easy-to-implement solution to the problem of guiding means misalignment and thermal expansion for linear guiding systems.

For this purpose, it is proposed according to a first aspect of the invention a deviation compensating device in a linear guiding system comprising a carriage and at least one slider slidably mounted on linear guiding means, said deviation compensating device mechanically connecting the carriage to the at least one slider slidably mounted on the linear guiding means, said deviation compensating device comprising resilient attaching means for connecting a slider upper part to a carriage lower part opposite to said slider upper part. The resilient attaching means comprise a first set of elastic fastening means vertically biasing said carriage lower part against said slider upper part with bearing means located between said carriage lower part and said slider upper part so that said carriage can pivot relatively to said slider at least around a longitudinal axis of said linear guiding means. The resilient attaching means comprise further a second set of elastic fastening means horizontally biasing said carriage lower part against said slider so that said carriage can move relatively to said slider at least along a horizontal transversal axis substantially perpendicular to said longitudinal axis.

According to the invention, the bearing means establish a linear contact or a point contact between said carriage lower part and said slider upper part.

Preferably, the bearing means comprise a cylinder located within a blind grove formed into either the carriage lower part or the slider upper part, or a ball located within a blind hole formed into either the carriage lower part or the slider upper part.

Alternatively, the bearing means comprise a cylindrical part or a spherical part protruding from either the carriage lower part or the slider upper part and in contact with the other one. The cylindrical part or spherical part is integral or mechanically attached to either the carriage lower part or the slider upper part.

Preferably, the first set of elastic fastening means comprises first attaching means mechanically attaching said slider upper part to said carriage lower part, wherein said carriage can move relatively to said slider within a delimited displacement range at least along a vertical axis perpendicular to a plan formed by said horizontal transversal axis and said longitudinal axis. The first set of elastic fastening means comprises further first spring means cooperating with said first attaching means for pressing the carriage lower part against said slider upper part.

Preferably, the first attaching means are at least one screw and said first spring means are at least one spring washer compressed by the at least one screw.

Advantageously, the second set of elastic fastening means comprises a carriage shoulder formed on the carriage lower part and extending substantially parallely to the longitudinal axis along a first side of the slider upper part, and second spring means pressing said slider against said shoulder.

Preferably, said second set of elastic fastening means comprise further a slider bracket attached to the carriage lower part and extending substantially parallely to the longitudinal axis along a second side of the slider upper part opposite to said first side of the slider upper part.

Preferably, the second spring means are at least one compression spring located between said slider bracket and said slider.

Advantageously, the first attaching means pass through at least one hole formed in said carriage lower part or in said slider upper part which is shaped for enabling the carriage to move respectively to the slider at least in the horizontal transversal direction.

Advantageously, the carriage lower part is integrally formed with the carriage or mechanically fixed to said carriage.

According to a second aspect of the invention, it is proposed a linear guiding system along a longitudinal axis comprising linear guiding means arranged parallely to the longitudinal axis, and a carriage slidably connected to said linear guiding means for moving along said longitudinal axis. The carriage is mechanically connected to at least one slider by one deviation compensating device as defined above wherein said slider slides along said linear guiding means.

Advantageously, the carriage is mechanically slidably connected to said linear guiding means by two sliders spaced apart from each other along said longitudinal axis.

Preferably, the linear guiding means are formed by a guiding rail, and the slider is a recirculating ball bearing slider interacting with said guiding rail.

Advantageously, the linear guiding system as defined above comprises a worktable attached to two carriages slidably connected to one pair of substantially parallel linear guiding means.

### BRIEF DESCRIPTION OF THE FIGURES

Other features and advantages of the present invention will emerge from the following description of embodiments of the invention provided as non-limiting examples for achieving various aspects of the invention. The description refers to the attached figures which illustrate, also by way of example, embodiments of the different invention aspects:
[Fig. 1]: Figure 1 illustrates a perspective view of a carriage of a linear guiding system;
[Fig. 2]: Figure 2 shows a cross section view of the carriage of the linear guiding system at the level of a slider;
[Fig. 3a]: Figures 3a illustrates the compensation of parallelism deviation between the working platform and the substructure;
[Fig. 3b]: Figure 3b illustrates the compensation of height deviation between the guiding rails; and
[Fig. 4a] [Fig. 4b]: Figures 4a and 4b illustrate the compensation of horizontal deviation between the guiding rails.

For the reader convenience, identical or similar elements bear the same reference over the whole figures set.

### DETAILED DESCRIPTION OF A PREFERRED EMBODIMENT

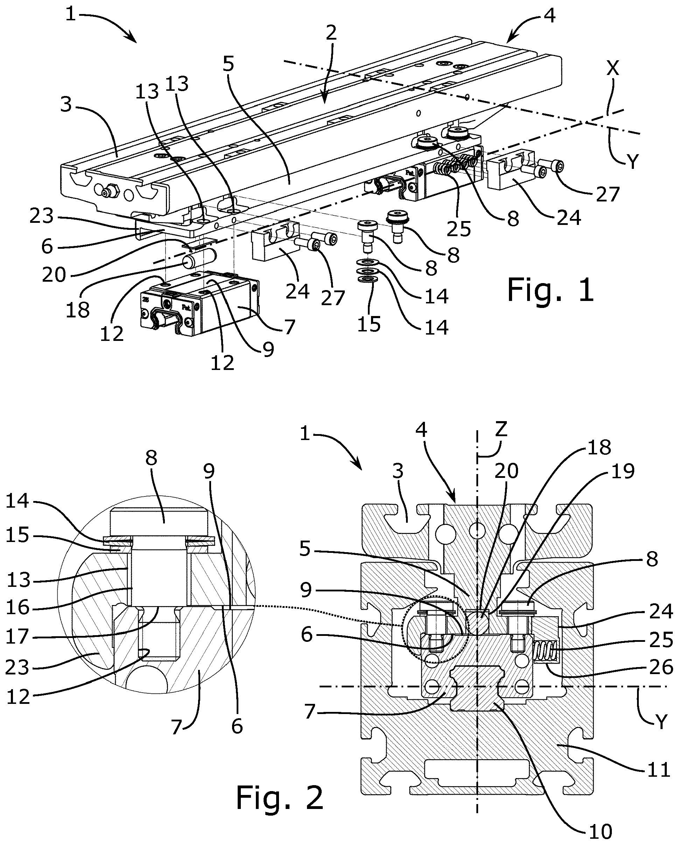

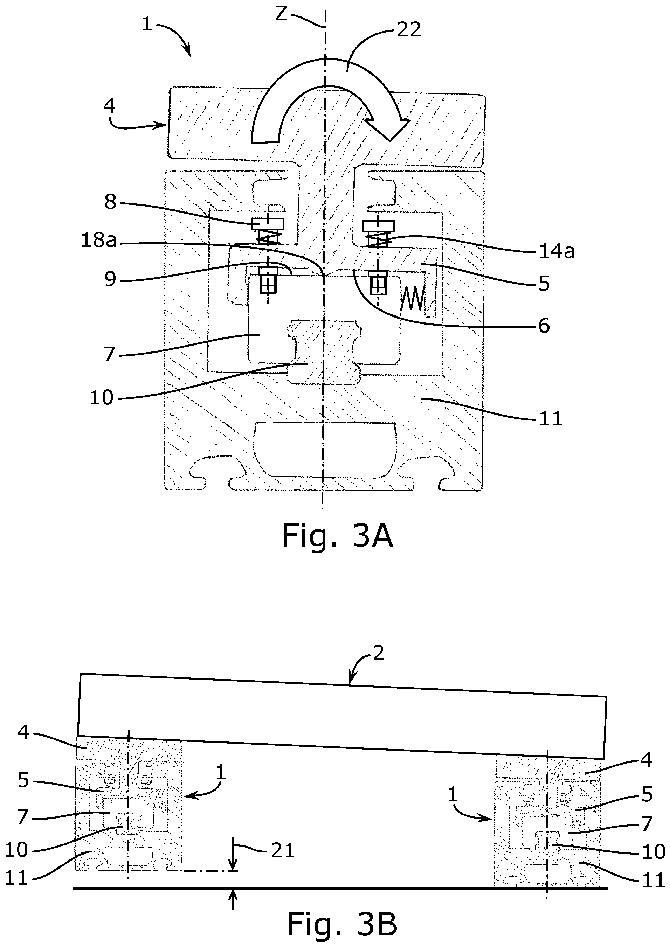

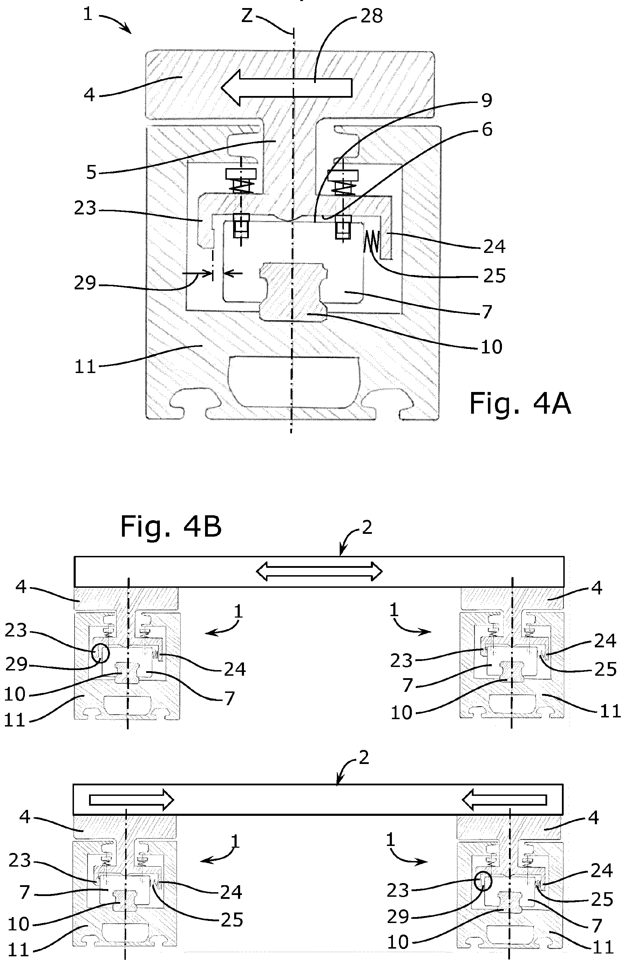

Figure **1** shows part of a linear guiding system **1,** also known as a linear axis, comprising a carriage **4** presenting bracketing groves **3** for securing a worktable **2** on the carriage **4** as shown in figures 3b and 4b. In general the worktable **2** is secured to two carriages **4** arranged parallely as explained below in relation with figures 3b and 4b.

A carriage lower part **5** extends downwardly the carriage **4** and has the shape of reversed T. The carriage lower part **5** presents a mounting flange **6** facing down for attaching at least one slider **7,** here two sliders **7,** to the carriage **4.** Each slider **7** presents a slider upper part **9** secured to the mounting flange **6** of the carriage **4** by four mounting screws **8** arranged vertically. Said mounting screws **8** can be screwed either into said slider upper part **9** (as shown in figures 1 and 2), or screwed into said carriage lower part **5** (not shown). Alternatively, a linear guiding system can comprise two carriages **4** each attached to one slider **7** and arranged one behind the other along a longitudinal axis **X** (embodiment not shown).

Each slider **7** is slidably mounted on a linear guiding rail **10** (shown in figure 2) which is attached to a substructure **11** as shown in figure **2****.** The slider **7** and linear guiding rail **10** present complementary guiding surfaces so that the carriage **4** can only slide along the guiding rail **10** in the direction of the longitudinal axis **X.** An electric motor, for example a servo motor (not shown), drives the carriage **4** along the longitudinal axis **X** through a mechanical transmission such as a screw-nut system, a belt transmission, or a rack-and-pinion transmission (not shown). Said at least one slider **7** aims at reducing significantly friction on the guiding rail **10.** Therefore, said at least one slider **7** can be for example a recirculating ball bearing slider .

As shown in the detail view in figure **2****,** the mounting screws **8** are screwed into vertical threaded blind holes **12** formed in the slider upper part **9.** Said mounting screws **8** go through vertical holes **13** formed in the mounting flange **6.** The head of the mounting screws **8** compress at least one spring washer **14** against the upper face of the carriage lower part **5.** This arrangement enables said carriage **4** to move along a vertical axis **Z** within a displacement range delimited by the head of the mounting screws **8.** Said vertical axis Z is perpendicular to a plan formed by said longitudinal axis **X** and a horizontal transversal axis **Y.** Figure **2** shows sets of two opposed spring washers **14** compressed by the mounting screws **8.** However, according to the technical context, there could be only one or more than two spring washers for each mounting screw **8.** In addition a regular washer **15** is inserted between the mounting flange **6** and the lowest spring washer **14.** The mounting screw **8** comprises a cylindrical portion **16** passing through the vertical hole **13** and separated from the threaded part of the mounting screw **8** by a screw shoulder **17** pressing on the slider upper part **9** when the mounting screw **8** is tight. The inner diameter of the vertical hole **13** is larger than the outed diameter of the cylindrical portion **16** so that the carriage **4** can move in a limited displacement range with respect to the slider **7.** Moreover, a cylindrical bearing **18** is located within a blind grove **19** formed through the mounting flange **6** of the carriage lower part **5.** The cylindrical bearing **18** is arranged horizontally and parallely to the longitudinal axis **X.** When the carriage **4** is attached to the slider **7,** the cylindrical bearing **18** is pinched between the carriage **4** and the slider **7** so that the flange **6** is spaced apart from the slider upper part **9.** In addition, a friction pad **20** can be inserted between the cylindrical bearing **18** and the bottom of the blind grove **19.**

As shown in figure 3a, the cylindrical bearing **18** can be replaced by a cylindrical protrusion **18**a protruding from the mounting flange **6** and resting on the slider upper part **9.** Here, the cylindrical protrusion **18**a is integral to the carriage lower part **5.** Alternatively, it can be formed as a separated element secured to the mounting flange **6.** The combination of the spring washers **14** (or the vertical compression springs **14**a) and the gaps between, on one hand, the vertical holes **13** and the cylindrical portion **16,** and, on the other hand, the mounting flange **6** and the slider upper part **9** enables the carriage to pivot around the cylindrical protrusion **18**a (or cylindrical bearing **18**) with respect to slider **7** as shown by pivoting arrow **22.**

Besides, the cylindrical bearing **18** can be replaced by a ball bearing (not shown) located in a blind hole formed into the carriage lower part so that, if required, the carriage **4** can pivot more or less in all directions around a ball joint with respect to the slider **7.**

As shown in figure 3b, when the worktable **2** is secured on two parallel linear guiding systems **1,** a height deviation **21** can occur between the substructures **11** on which the linear guiding rails **10** of the linear guiding systems **1** are mounted. The pivoting of the carriage **4** with respect slider **7** around the longitudinal axis **X** of each linear guiding systems **1** avoids that mechanical constraints are induced in the linear guiding systems **1 by** the torque around longitudinal axis **X** resulting from the height deviation **21.**

As shown in figures **2** and 4a, the slider **7** is horizontally clamped with respect to the carriage lower part **5** between a carriage shoulder **23** and a slider bracket **24.** The shoulder **23** extends on one side of the slider **7** vertically downwardly from the mounting flange **6** and horizontally along the side of the carriage upper part **6** parallely to the longitudinal axis **X.** The slider bracket **24** extends along the other side of the slider **7** opposite to the side facing the carriage shoulder **23,** and parallely to the longitudinal axis **X.** Horizontal compression springs **25** are located in a lateral grove **26** formed in the slider bracket **24** (see figure 2). The lateral grove **26** extends horizontally and faces the slider **7** so that the horizontal compression springs **25** are compressed between the bottom of said lateral grove **26** and the side of the slider **7** by bracketing screws **27** (shown in figure **1**) securing the bracket **24** on the carriage lower part **5.**

The spacing between the linear guiding rail can vary along their length resulting in transversal strengths acting along said horizontal transversal axis **Y** and shown by transversal arrow **28** in figure **4**a. These transversal strengths generate transversal shifts of the carriage **4** with respect to the slider **7** by compressing the horizontal compression springs **25** of one or the other linear guiding systems **1** as shown in figure **4**a and generating a transversal gap **29** between the carriage shoulder **23** and the side of the slider **7.**

In general, significant amount of heat is generated in the operational environment of the linear guiding systems **1,** in particular heat emitted by the electric motor driving the carriages **4.** This heat generates thermal expansion also inducing transversal strengths between the carriage **4** and the slider **7.**

Therefore, the transversal effort generated by both the thermal expansion and the lateral rail misalignment causes the carriages **4** of the two linear guiding systems **1** either to move away one from another as shown in the upper part of figure 4b, or to come closer one to another as shown in the lower part of figure 4b.

As shown in the upper part of figure 4b, when the carriages **4** tend to move away one from another, the carriage shoulder **23** of the right linear guiding system **1** is pressed against the respective side of the slider **7,** while the carriage shoulder **23** of the left linear guiding system **1** is separated from the respective side of the slider **7** by transversal gap **29.** On the contrary, when the carriages **4** tend to come closer one to another, as shown in the lower part of figure 4b, the carriage shoulder **23** of the left linear guiding system **1** is pressed against the respective side of the slider **7,** while the carriage shoulder **23** of the right linear guiding system **1** is separated from the respective side of the slider **7** by transversal gap **29.**

The ability of the carriage **4** of the linear guiding systems **1** to shift laterally in the direction of said horizontal transversal axis **Y** avoids that shear strengths are exerted on the linear guiding systems **1** between the carriage **4** and the slider **7.**

The above description and the figures show different embodiments of the specific aspects of the invention, in particular the carriage **4** is slidably connected to the linear guiding rail **10** by two sliders **7** and one worktable **2** secured to two carriages **4,** they could be configured and implemented in other ways and in different contexts such as, for example, a combination of linear guiding systems where the carriages are slidable along different axes such as longitudinal axis **X,** horizontal transversal axis **Y** and vertical axis **Z.** Besides, the carriage **4** of the linear guiding system **1** could be slidably connected to the linear guiding rail by only one slider or more than two. The carriage lower part **5** could be split two separated pieces, one per slider **7.** The spring washers **14** could be inserted between the mounting flange **6** of the carriage **4** and the slider upper part **9.** Furthermore, said at least one slider 7 can use different ball bearing arrangement than the recirculating ball bearing, or even gliding pads made of PTFE.

## Claims

1. Deviation compensating device in a linear guiding system comprising a carriage (4) and at least one slider (7) slidably mounted on linear guiding means (10), said deviation compensating device mechanically connecting the carriage (4) to the at least one slider (7) slidably mounted on the linear guiding means (10), said deviation compensating device comprising:
- resilient attaching means for connecting a slider upper part (9) to a carriage lower part (5) opposite to said slider upper part (9);
**characterized in that**:
said resilient attaching means comprise:
- a first set of elastic fastening means (8, 14) vertically biasing said carriage lower part (5) against said slider upper part (9) with bearing means (18, 18a) located between said carriage lower part (5) and said slider upper part (9) so that said carriage (4) can pivot relatively to said slider (7) at least around a longitudinal axis (X) of said linear guiding means (1); and
- a second set of elastic fastening means (23, 24, 25) horizontally biasing said carriage lower part (5) against said slider (7) so that said carriage (1) can move relatively to said slider (3) at least along a horizontal transversal axis (Y) substantially perpendicular to said longitudinal axis (X). and **in that** said bearing means (18, 18a) establish a linear contact or a point contact between said carriage lower part (5) and said slider upper part (9).

2. Deviation compensating device according to claim 1, **characterized in that** said bearing means (18, 18a) comprise:
- a cylinder (18) located within a blind grove (19) formed into either the carriage lower part (5) or the slider upper part (9); or
- a ball located within a blind hole formed into either the carriage lower part (5) or the slider upper part (9).

3. Deviation compensating device according to claim 1, wherein:
- said bearing means comprise a cylindrical part (18a) or a spherical part protruding from either the carriage lower part (5) or the slider upper part (9) and in contact with the other one; and
- said cylindrical part (18a) or spherical part is integral or mechanically attached to either the carriage lower part (5) or the slider upper part (9).

4. Deviation compensating device according to any one of the preceding claims, wherein said first set of elastic fastening means (8, 14) comprise
- first attaching means (8) mechanically attaching said slider upper part (9) to said carriage lower part (5), wherein said carriage (1) can move relatively to said slider (3) within a delimited displacement range at least along a vertical axis (Z) perpendicular to a plan formed by said horizontal transversal axis (Y) and said longitudinal axis (X); and
- first spring means (14, 14a) cooperating with said first attaching means (8) for pressing the carriage lower part (5) against said slider upper part (9).

5. Deviation compensating device according to claim 4, wherein said first attaching means are at least one screw (8) and said first spring means are at least one spring washer (14) compressed by the at least one screw (8).

6. Deviation compensating device according to any one of the preceding claims, wherein said second set of elastic fastening means comprise
- a carriage shoulder (23) formed on the carriage lower part (5) and extending substantially parallely to the longitudinal axis (X) along a first side of the slider upper part (9) ; and
- second spring means (25) pressing said slider (7) against said shoulder (23).

7. Deviation compensating device according to claim 6, wherein said second set of elastic fastening means comprises further:
- a slider bracket (24) attached to the carriage lower part (5) and extending substantially parallely to the longitudinal axis (X) along a second side of the slider upper part (9) opposite to said first side of the slider upper part (9).

8. Deviation compensating device according to claim 7, wherein said second spring means are at least one compression spring (25) located between said slider bracket (24) and said slider (7).

9. Deviation compensating device according to any one of the claims 4 to 8, wherein said first attaching means (8) pass through at least one hole (13) formed in said carriage lower part (5) or in said slider upper part (9) which is shaped for enabling the carriage (4) to move respectively to the slider (7) at least in the horizontal transversal direction (Y).

10. Deviation compensating device according to any one of the preceding claims, wherein said carriage lower part (5) is integrally formed with the carriage (4) or mechanically fixed to said carriage (4).

11. Linear guiding system along a longitudinal axis (X) comprising:
- linear guiding means (10) arranged parallely to the longitudinal axis (X); and
- a carriage (4) slidably connected to said linear guiding means (10) for moving along said longitudinal axis (X);
- **characterized in that** said carriage (4) is mechanically connected to at least one slider (7) by one deviation compensating device as defined in any one of the preceding claims; wherein said slider (7) slides along said linear guiding means (10).

12. Linear guiding system according to claim 11, wherein:
- said carriage (4) is mechanically slidably connected to said linear guiding means (10) by two sliders (7) spaced apart from each other along said longitudinal axis (X).

13. Linear guiding system according to claim 11 or 12, wherein:
- said linear guiding means are formed by a guiding rail (10); and
- said slider (7) is a recirculating ball bearing slider interacting with said guiding rail (10).

14. Linear guiding system according to any one of the claims 11 to 13, comprising:
- a worktable (2) attached to two carriages (4) slidably connected to one pair of substantially parallel linear guiding means (10).

## Patentansprüche

1. Abweichungskompensationsvorrichtung in einem Linearführungssystem umfassend einen Schlitten (4) und mindestens ein Gleitstück (7), das auf Linearführungsmitteln (10) gleitbar montiert ist, wobei die Abweichungskompensationsvorrichtung den Schlitten (4) mit dem mindestens einen Gleitstück (7), das auf den Linearführungsmitteln (10) gleitbar montiert ist, mechanisch verbindet, die Abweichungskompensationsvorrichtung umfassend:
- elastische Anbringungsmittel zum Verbinden eines Gleitstückoberteils (9) mit einem Schlittenunterteil (5), das dem Gleitstückoberteil (9) gegenüberliegt;
**dadurch gekennzeichnet, dass:**
die elastischen Anbringungsmittel umfassen:
- einen ersten Satz elastischer Befestigungsmittel (8, 14), die das Schlittenunterteil (5) gegen das Gleitstückoberteil (9) vertikal vorspannen, wobei sich Lagermittel (18, 18a) zwischen dem Schlittenunterteil (5) und dem Gleitstückoberteil (9) befinden, sodass der Schlitten (4) relativ zu dem Gleitstück (7) mindestens um eine Längsachse (X) der Linearführungsmittel (1) herum schwenken kann; und
- einen zweiten Satz elastischer Befestigungsmittel (23, 24, 25), die das Schlittenunterteil (5) gegen das Gleitstück (7) horizontal vorspannen, sodass sich der Schlitten (1) relativ zu dem Gleitstück (3) mindestens entlang einer horizontalen Querachse (Y), die im Wesentlichen senkrecht zu der Längsachse (X) ist, bewegen kann.
und dadurch, dass die Lagermittel (18,18a) einen Linearkontakt oder einen Punktkontakt zwischen dem Schlittenunterteil (5) und dem Gleitstückoberteil (9) herstellen.

2. Abweichungskompensationsvorrichtung nach Anspruch 1,
**dadurch gekennzeichnet, dass** die Lagermittel (18, 18a) umfassen:
- einen Zylinder (18), der sich innerhalb einer Sacknut (19) befindet, die entweder in dem Schlittenunterteil (5) oder in dem Gleitstückoberteil (9) ausgebildet ist; oder
- eine Kugel, die sich innerhalb eines Sacklochs befindet, das entweder in dem Schlittenunterteil (5) oder in dem Gleitstückoberteil (9) ausgebildet ist.

3. Abweichungskompensationsvorrichtung nach Anspruch 1, wobei:
- die Lagermittel ein zylindrisches Teil (18a) oder ein kugelförmiges Teil, das entweder von dem Schlittenunterteil (5) oder von dem Gleitstückoberteil (9) vorsteht und mit dem anderen in Kontakt steht, umfassen; und
- das zylindrische Teil (18a) oder das kugelförmige Teil integral zu entweder dem Schlittenunterteil (5) oder dem Gleitstückoberteil (9) ist oder mechanisch daran angebracht ist.

4. Abweichungsausgleichsvorrichtung nach einem der vorstehenden Ansprüche, wobei der erste Satz elastischer Befestigungsmittel (8,14) umfasst
- erste Befestigungsmittel (8), die das Gleitstückoberteil (9) an dem Schlittenunterteil (5) mechanisch anbringen, wobei sich der Schlitten (1) relativ zu dem Gleitstück (3) innerhalb eines begrenzten Verschiebungsbereichs mindestens entlang einer vertikalen Achse (Z) bewegen kann, die senkrecht zu einer Ebene ist, die durch die horizontale Querachse (Y) und die Längsachse (X) ausgebildet ist; und
- erste Federmittel (14, 14a), die mit den ersten Befestigungsmitteln (8) zum Drücken des Schlittenunterteils (5) gegen das Gleitstückoberteil (9) zusammenwirken.

5. Abweichungsausgleichsvorrichtung nach Anspruch 4, wobei die ersten Anbringungsmittel mindestens eine Schraube (8) und die ersten Federmittel mindestens eine Federscheibe (14), die durch die mindestens eine Schraube (8) zusammengedrückt wird, sind.

6. Abweichungsausgleichsvorrichtung nach einem der vorstehenden Ansprüche, wobei der zweite Satz elastischer Befestigungsmittel umfasst
- eine Schlittenschulter (23), die an dem Schlittenunterteil (5) ausgebildet ist und sich im Wesentlichen parallel zu der Längsachse (X) entlang einer ersten Seite des Schlittenoberteils (9) erstreckt; und
- zweite Federmittel (25), die das Gleitstück (7) gegen die Schulter (23) drücken.

7. Abweichungskompensationsvorrichtung nach Anspruch 6, wobei der zweite Satz elastischer Befestigungsmittel ferner umfasst:
- eine Gleitstückhalterung (24), die an dem Schlittenunterteil (5) angebracht ist und sich im Wesentlichen parallel zu der Längsachse (X) entlang einer zweiten Seite des Gleitstückoberteils (9), die der ersten Seite des Gleitstückoberteils (9) gegenüberliegt, erstreckt.

8. Abweichungsausgleichsvorrichtung nach Anspruch 7, wobei die zweiten Federmittel mindestens eine Druckfeder (25), die sich zwischen der Gleitstückhalterung (24) und dem Gleitstück (7) befindet, sind.

9. Abweichungsausgleichsvorrichtung nach einem der Ansprüche 4 bis 8, wobei die ersten Anbringungsmittel (8) durch mindestens ein Loch (13) hindurchgehen, das in dem Schlittenunterteil (5) oder in dem Gleitstückoberteil (9) ausgebildet ist und zum Ermöglichen des Schlittens (4), sich mindestens in der horizontalen Querrichtung (Y) in Bezug auf das Gleitstück (7) zu bewegen, geformt ist.

10. Abweichungsausgleichsvorrichtung nach einem der vorstehenden Ansprüche, wobei das Schlittenunterteil (5) mit dem Schlitten (4) integral ausgebildet ist oder an dem Schlitten (4) mechanisch befestigt ist.

11. Linearführungssystem entlang einer Längsachse (X), umfassend:
- Linearführungsmittel (10), die zu der Längsachse (X) parallel angeordnet sind; und
- einen Schlitten (4), der mit den Linearführungsmitteln (10) zum Bewegen entlang der Längsachse (X) gleitbar verbunden ist;
- **dadurch gekennzeichnet, dass** der Schlitten (4) durch eine Abweichungsausgleichsvorrichtung, wie in einem der vorstehenden Ansprüche definiert, mit mindestens einem Gleitstück (7) mechanisch verbunden ist; wobei das Gleitstück (7) entlang der Linearführungsmittel (10) gleitet.

12. Linearführungssystem nach Anspruch 11, wobei:
- der Schlitten (4) durch zwei Gleitstücke (7), die entlang der Längsachse (X) voneinander beabstandet sind, mit den Linearführungsmitteln (10) mechanisch gleitbar verbunden ist.

13. Linearführungssystem nach Anspruch 11 oder 12, wobei:
- die Linearführungsmittel durch eine Führungsschiene (10) ausgebildet sind; und
- das Gleitstück (7) ein Kugelumlauflagergleitstück, das mit der Führungsschiene (10) interagiert, ist.

14. Linearführungssystem nach einem der Ansprüche 11 bis 13, umfassend:
- einen Arbeitstisch (2), der an zwei Schlitten (4), die mit einem Paar im Wesentlichen paralleler linearer Führungsmittel (10) gleitbar verbunden sind, angebracht ist.

## Revendications

1. Dispositif de compensation d'écarts dans un système de guidage linéaire comprenant un chariot (4) et au moins un coulisseau (7) monté de manière coulissante sur des moyens de guidage linéaire (10), ledit dispositif de compensation d'écarts reliant mécaniquement le chariot (4) à l'au moins un coulisseau (7) monté de manière coulissante sur les moyens de guidage linéaire (10), ledit dispositif de compensation d'écarts comprenant :
- des moyens de raccord élastiques permettant de relier une partie supérieure du coulisseau (9) à une partie inférieure du chariot (5) opposée à ladite partie supérieure du coulisseau (9) ;
**caractérisé en ce que** :
lesdits moyens de raccord élastiques comprennent :
- un premier ensemble de moyens de fixation élastiques (8, 14) sollicitant verticalement ladite partie inférieure du chariot (5) contre ladite partie supérieure du coulisseau (9) avec des moyens d'appui (18, 18a) situés entre ladite partie inférieure du chariot (5) et ladite partie supérieure du coulisseau (9) de sorte que ledit chariot (4) puisse pivoter par rapport audit coulisseau (7) au moins autour d'un axe longitudinal (X) dudit moyen de guidage linéaire (1) ; et
- un second ensemble de moyens de fixation élastiques (23, 24, 25) sollicitant horizontalement ladite partie inférieure du chariot (5) contre ledit coulisseau (7) de sorte que ledit chariot (1) puisse se déplacer par rapport audit coulisseau (3) au moins le long d'un axe transversal horizontal (Y) sensiblement perpendiculaire audit axe longitudinal (X).
et **en ce que** lesdits moyens d'appui (18, 18a) établissent un contact linéaire ou un contact ponctuel entre ladite partie inférieure du chariot (5) et ladite partie supérieure du coulisseau (9).

2. Dispositif de compensation d'écarts selon la revendication 1,
**caractérisé en ce que** lesdits moyens d'appui (18, 18a) comprennent :
- un cylindre (18) situé à l'intérieur d'une rainure aveugle (19) formée soit dans la partie inférieure du chariot (5) soit dans la partie supérieure du coulisseau (9) ; ou
- une bille située dans un trou aveugle formé soit dans la partie inférieure du chariot (5), soit dans la partie supérieure du coulisseau (9).

3. Dispositif de compensation d'écarts selon la revendication 1, dans lequel :
- lesdits moyens d'appui comprennent une partie cylindrique (18a) ou une partie sphérique faisant saillie à partir de la partie inférieure du chariot (5) ou de la partie supérieure du coulisseau (9) et en contact avec l'autre ; et
- ladite partie cylindrique (18a) ou partie sphérique est intégrée ou raccordée mécaniquement à la partie inférieure du chariot (5) ou à la partie supérieure du coulisseau (9).

4. Dispositif de compensation d'écarts selon l'une quelconque des revendications précédentes, dans lequel ledit premier ensemble de moyens de fixation élastiques (8, 14) comprend
- des premiers moyens de raccord (8) raccordant mécaniquement ladite partie supérieure du coulisseau (9) à ladite partie inférieure du chariot (5), dans lequel ledit chariot (1) peut se déplacer par rapport audit coulisseau (3) dans une plage de déplacement délimitée au moins le long d'un axe vertical (Z) perpendiculaire à un plan formé par ledit axe transversal horizontal (Y) et ledit axe longitudinal (X) ; et
- des premiers moyens à ressort (14, 14a) coopérant avec lesdits premiers moyens de raccord (8) permettant de presser la partie inférieure du chariot (5) contre ladite partie supérieure du coulisseau (9).

5. Dispositif de compensation d'écarts selon la revendication 4, dans lequel lesdits premiers moyens de raccord est au moins une vis (8) et lesdits premiers moyens à ressort sont au moins une rondelle élastique (14) comprimée par au moins une vis (8).

6. Dispositif de compensation d'écarts selon l'une quelconque des revendications précédentes, dans lequel ledit second ensemble de moyens de fixation élastiques comprend
- un épaulement de chariot (23) formé sur la partie inférieure du chariot (5) et s'étendant sensiblement parallèlement à l'axe longitudinal (X) le long d'un premier côté de la partie supérieure du coulisseau (9) ; et
- des seconds moyens à ressort (25) pressant ledit coulisseau (7) contre ledit épaulement (23).

7. Dispositif de compensation d'écarts selon la revendication 6, dans lequel ledit second ensemble de moyens de fixation élastiques comprend en outre :
- un support de coulisseau (24) raccordé à la partie inférieure du chariot (5) et s'étendant sensiblement parallèlement à l'axe longitudinal (X) le long d'un second côté de la partie supérieure du coulisseau (9) opposé audit premier côté de la partie supérieure du coulisseau (9).

8. Dispositif de compensation d'écarts selon la revendication 7, dans lequel lesdits seconds moyens à ressort sont au moins un ressort de compression (25) situé entre ledit support de coulisseau (24) et ledit coulisseau (7).

9. Dispositif de compensation d'écarts selon l'une quelconque des revendications 4 à 8, dans lequel lesdits premiers moyens de raccord (8) traversent au moins un trou (13) formé dans ladite partie inférieure du chariot (5) ou dans ladite partie supérieure du coulisseau (9), qui est façonné pour permettre au chariot (4) de se déplacer par rapport au coulisseau (7) au moins dans la direction transversale horizontale (Y).

10. Dispositif de compensation d'écarts selon l'une quelconque des revendications précédentes, dans lequel ladite partie inférieure du chariot (5) est formée d'une seule pièce avec le chariot (4) ou raccordée mécaniquement audit chariot (4).

11. Système de guidage linéaire le long d'un axe longitudinal (X) comprenant :
- un moyen de guidage linéaire (10) disposé parallèlement à l'axe longitudinal (X) ; et
- un chariot (4) relié de manière coulissante aux moyens de guidage linéaire (10) pour se déplacer le long de l'axe longitudinal (X) ;
- **caractérisé en ce que** ledit chariot (4) est relié mécaniquement à au moins un coulisseau (7) par un dispositif de compensation d'écarts tel que défini dans l'une quelconque des revendications précédentes ; dans lequel ledit coulisseau (7) coulisse le long desdits moyens de guidage linéaire (10).

12. Système de guidage linéaire selon la revendication 11, dans lequel :
- ledit chariot (4) est mécaniquement relié de manière coulissante audit moyen de guidage linéaire (10) par deux coulisseaux (7) espacés l'un de l'autre le long dudit axe longitudinal (X).

13. Système de guidage linéaire selon la revendication 11 ou 12, dans lequel :
- lesdits moyens de guidage linéaire sont constitués d'un rail de guidage (10) ; et
- ledit coulisseau (7) est un curseur à recirculation de billes interagissant avec ledit rail de guidage (10).

14. Système de guidage linéaire selon l'une quelconque des revendications 11 à 13, comprenant :
- une table porte-pièce (2) raccordée à deux chariots (4) reliés de manière coulissante à une paire de moyens de guidage linéaire (10) sensiblement parallèles.
